# EUROPEAN PATENT SPECIFICATION

(11) **EP 2 117 325 B1**
(45) Date of publication and mention of the grant of the patent: **24.11.2010**
(21) Application number: 08707403.5
(22) Date of filing: 30.01.2008
(51) Int. Cl.: A22C 11/10

(54) **CHAIN FOR FORMING SAUSAGES OR THE LIKE AND MACHINE COMPRISING SUCH A CHAIN**
KETTE ZUM FORMEN VON WÜRSTEN ODER DERGLEICHEN UND MASCHINE MIT DERARTIGER KETTE
CHAÎNE À FORMER LES SAUCISSES OU ANALOGUE ET MACHINE COMPORTANT UNE TELLE CHAÎNE

(30) Priority: 02.02.2007 IT MI20070033 U
(43) Date of publication of application: 18.11.2009
(73) Proprietor: Regina Catene Calibrate S.p.A., 20122 Milano (IT)
(72) Inventor: GARBAGNATI, Carlo, I-23884 Castello Brianza LC (IT); BADDARIA, Giuseppe, 20122 MILAN (IT)
(74) Representative: Faraggiana, Vittorio
(86) International application number: PCT/EP2008/000704
(87) International publication number: WO 2008/092651

(56) References cited:
- DE-U1- 20 220 038
- US-A- 3 873 744
- US-A- 4 972 547

## Description

The present invention refers to an innovative chain to be used in a machine for forming sausages or the like, and, more in general, to a machine comprising such a chain. A prior art chain is known from US-A-3 873 744. In the prior art, machines are known for forming sausages, which comprise means suitable for supplying a continuous sausage meat tube to a forming station that makes a string of sausages from the sausage meat tube.

The forming station comprises a pair of chains brought together along a portion of the circulating path thereof. The sausage meat tube is slid between the chains that have been brought together, where the sausage meat tube is slid between the chains brought together, where the sausage meat tube is pinched at regular intervals to form the sequence of sausages.

On the links of the chain there are fixed metal positioning elements, each of which comprises a pair of protrusions suitable for grasping the tube on one side. The tube is maintained in the correct position during pinching, remaining in the space between the facing positioning elements of the two chains.

Each chain is also provided with a series of metal pinching elements that correspond to pairs with respective pinching elements for pinching the other chain so as to pinch the tube on opposite sides and define a separating point between one sausage and the next. The pinching elements comprise a V-shaped profile that cooperates with a corresponding V profile of a pinching element of the adjacent chain to achieve the pinching.

The positioning elements are riveted to each link of the chain; also the pinching elements are riveted to the links of the chain, the pinching elements are spaced apart from one another according to the desired length of the sausages. The chains made according to the prior art have a certain structural complexity, which is due to the great number of components. This affects the cost of the chain, in addition to the total weight thereof.

Known chains also have drawbacks from the hygiene point of view, as it is difficult to clean known chains at the positioning points of the positioning and pinching elements on the links of the chain.

Further, the structure of the chain does not facilitate the customization of the forming station. For example, if it is desired to change the sausage forming pitch, the pair of chains has to be replaced with a pair of chains with a different pitch.

The general object of the present invention is to remedy the aforesaid drawbacks by providing a chain for forming sausages that is cheap, has a simple structure and is light.

A further object of the invention is to provide a chain that is easily cleanable and enables a high degree of hygiene to be obtained.

Another object of the invention is to provide a chain that is easily customizable, enabling, for example, the length of the sausages to be varied in a rapid and easy manner.

In view of this object it was decided to devise, according to the invention, a chain intended to be used in a machine for forming sausages or the like starting from a sausage meat tube, the chain having in use a portion arranged adjacent to a corresponding portion of a second chain of the device with the sausage meat tube interposed between the two adjacent portions of the two chains, the chain comprising a plurality of links interconnected in sequence and having pinching elements for pinching the sausage meat tube that are suitable for corresponding with respective pinching elements of the second chain of the device, the chain also comprising positioning elements suitable for grasping at least partially the sausage meat tube along said portion adjacent to the second chain, **characterized in that** the positioning elements are made as one piece with the links of the chain.

In order to make clearer the explanation of the innovative principles of the present invention and the advantages thereof over the prior art a description follows below, which discloses by way of example, with the help of the attached drawings, a possible embodiment applying such principles. In the drawings:
- figure 1 is a schematic view of a machine for forming sausages according to the invention,
- figure 2 is a perspective view of a part of a chain to be used in the machine for forming sausages according to the invention,
- figure 3 is a frontal view of two chains as in figure 2, provided with pinching elements that have been brought together as occurs during use of the machine for forming sausages,

- figure 4 is a side view of portions of the two chains shown in figure 3,
- figure 4b is a perspective view of a link of the chain according to the invention to which the pinching element is about to be applied,
- figure 5 is a perspective view of a second alternative embodiment of the invention,
- figure 6 is a front view of the second embodiment of the invention,
- figure 7 is a top view of the second embodiment of the invention,
- figure 8 is a perspective view of a third alternative embodiment of the invention,
- figure 9 is a front view of the third embodiment of the invention,
- figure 10 is a top view of the third embodiment of the invention,
- figure 11 is a perspective view of a fourth embodiment of the invention,
- figure 12 is a perspective view of a fifth embodiment of the invention,
- figure 13 is a perspective view of a sixth embodiment of the invention.

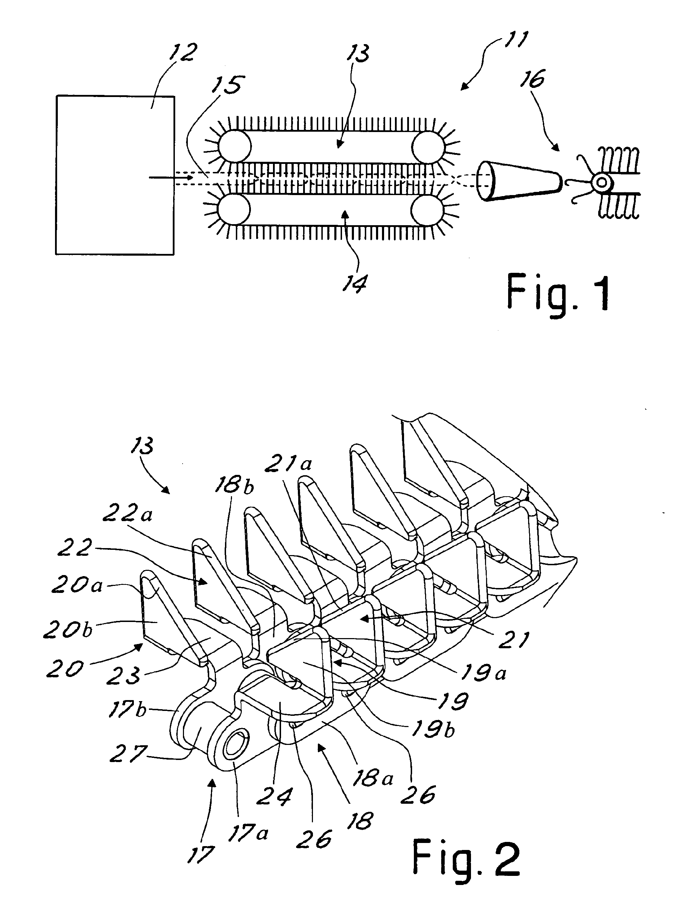

With reference to the figures, in figure 1 there is shown schematically a machine 11 for forming sausages or the like, which comprises a station 12 for supplying a continuous tube of sausage meat 15. At the outlet from the station 12, the tube 15 is slid between two neighboring portions of the two chains 13, 14, where pinching of the tube occurs to define a sequence of sausages. According to known techniques, the tube 15 can be maintained twisted during pinching, and advances integrally with the two chains 13, 14 during operation of the machine.

Downstream of the chains 13, 14, which are rotated by known toothed crowns, the machine 11 comprises a known conveying system 16 that removes the string of sausages that has just been formed to send the string of sausages to possible further processing stations.

In figure 2 there is shown the chain 13, which comprises a plurality of links 17, 18 interconnected in sequence and has positioning elements 19-22 suitable for grasping at least partially the sausage meat tube 15 arranged between the two chains 13, 14. The positioning elements 19-22 are made as one piece with the links of the chain 13. Preferably, each link 17, 18 comprises a pair of parallel plates 17a, 17b and 18a, 18b interconnected to the adjacent links by articulation pivots 26 that are transverse to the chain. The links of the chain have a bush or roller structure, with bushes fitted on interconnecting pivots in the case of bush chains and rollers 27 that are in turn fitted above the bushes in the case of a roller chain; links 17 with plates brought near one another are interspersed as links 18 with plates that are spaced further apart, according to known teachings.

The positioning elements 19-22 extend as one piece from the plates of the links 17, 18. Each link comprises two positioning elements intended for being arranged on opposite sides of the sausage meat tube. Each plate 17a, 17b and 18a, 18b of a link is matched by a positioning element 19-22, as is clearly visible in figure 2.

When two identical chains 13, 14 of the type shown in figure 2 are arranged alongside with counterfacing positioning elements, the positioning elements define a longitudinal space inside which the sausage meat tube 15 is advanced during pinching operations.

Advantageously, each positioning element 19-22 comprises a flat wall that is almost orthogonal to the movement direction of the chain, provided with an edge 19a, 20a, 21a, 22a intended for contacting the sausage meat tube. Such walls have a substantially triangular shape with the edge 19a, 20a, 21a, 22a arranged oblique to the plane of the plate of the link.

With reference to the link 17 shown in figure 1, the orthogonal flat wall 19b of a first positioning element 19 is near a front end of the link, whilst the flat wall 20b of the second positioning element 20 is near an opposite rear end of the link.

As will be seen, the particular configuration of the elements 19-22 enables effective snap anchoring of the pinching element of the tube to be achieved. Further, positioning of the tube is improved owing to the fact that the walls 19b-20b are staggered in a longitudinal direction.

The walls 20b and 19b extend from walls 23, 24 orthogonal to the plates 17a, 17b and protrude outside the link 17. The link 18 has a similar structure, with the triangular walls that form the supporting edges 21a, 22a arranged aligned on the triangular walls of the link 17.

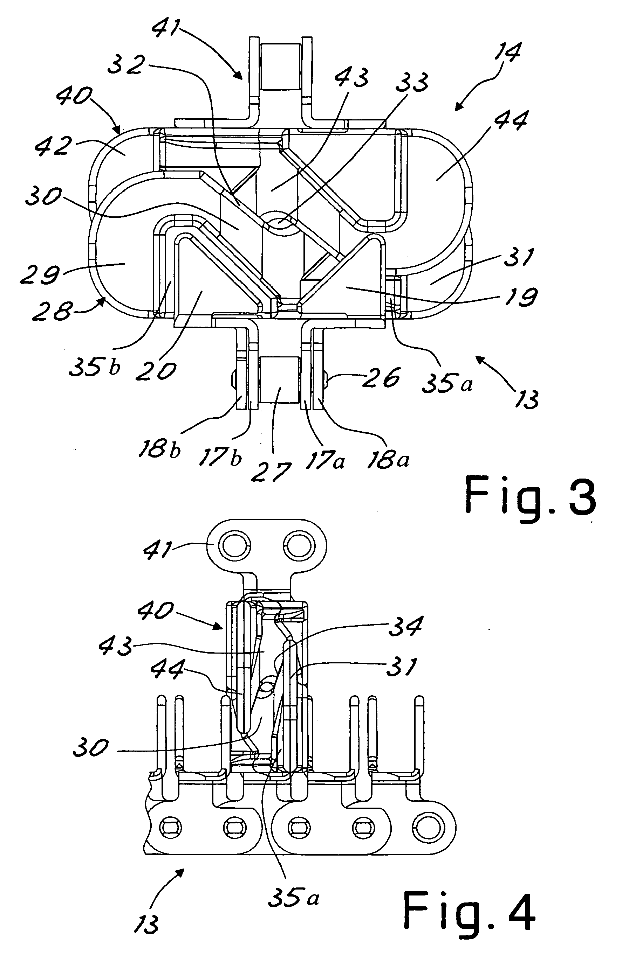

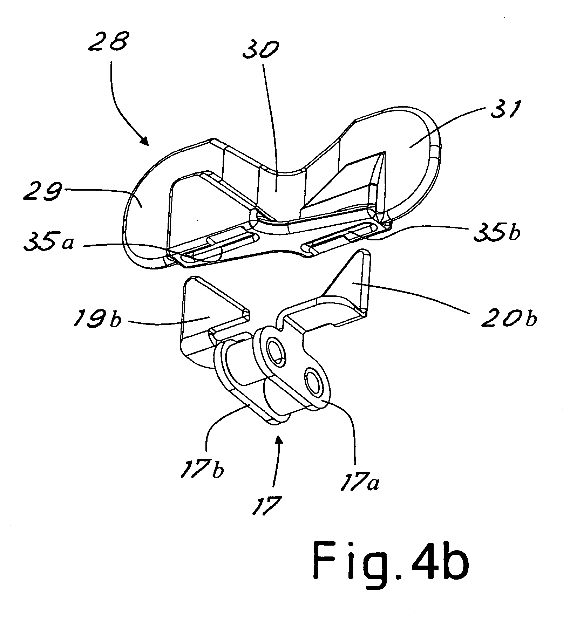

As is clearly visible in figures 3 and 4, on the chain 13 there are mounted pinching elements 28 (also called "pinchers"), which are suitable for cooperating in pairs with corresponding pinching elements 40 mounted on the links of the chain 14. The elements 28, 40 have the shape of a plate shaped with facing V-shaped profiles, between which there remains a gap 33 inside which the pinched part of the sausage meat tube 15 is pinched.

Advantageously, each pinching element 28, 40 is fixable to a respective link 17, 41 of the chain at the positioning elements of the link. The element 28 is snap-fitted on a link 17. For this purpose, the pinching element 28 is provided with two hollow portions (or pockets) 35a and 35b open below, suitable for being snap-fitted or forced on the walls 19b, 20b of the link (as shown in figure 4b). This teaching enables the distance between the pinching elements to be customized at will in a rapid and easy manner, whilst maintaining a firm link to the chain.

Each pinching element 28 comprises a central wall 30 that is substantially transverse to the movement direction of the chain that has a V-shaped edge 32, 34 intended for cooperating with a similar V-shaped edge of the element 40.

The two sides 32, 34 of the V-shaped edge have a tilt of approximately 45-50° with respect to the plane on which lie the adjacent portions of the two chains 13, 14. Advantageously, as in the example in figure 4, the wall 30 with a V-shaped edge of the pinching element 28 is slightly tilted with respect to the direction that is orthogonal to the conveying direction; the element 28 also comprises two external walls 29, 31 that are orthogonal to the sliding direction of the chain on opposite sides of the wall 30 with a V-shaped edge.

The element 40 is shaped in a similar manner, with a central wall 43 slightly tilted with respect to a plane that is orthogonal to the sliding direction and a pair of external side walls 42, 44 that are orthogonal to the sliding direction.

The particular shape of the elements 28, 40 enables optimum pinching of the sausage meat tube 15 to be obtained.

The pinching elements are made of plastics, for example of Delrin. The links 17, 18, 40 are made of metal, for example of steel.

According to the preferred embodiment of the invention, the pinching element is anchored directly on the positioning elements of the link, and it is not necessary to provide a suitable link provided with specific means for anchoring the pinching element.

The chain has a simplified lighter structure with a limited number of components, and is manufacturable cheaply. Further, cleaning of the chain is easier than with the chains used in the prior art as there are not numerous pieces fixed together.

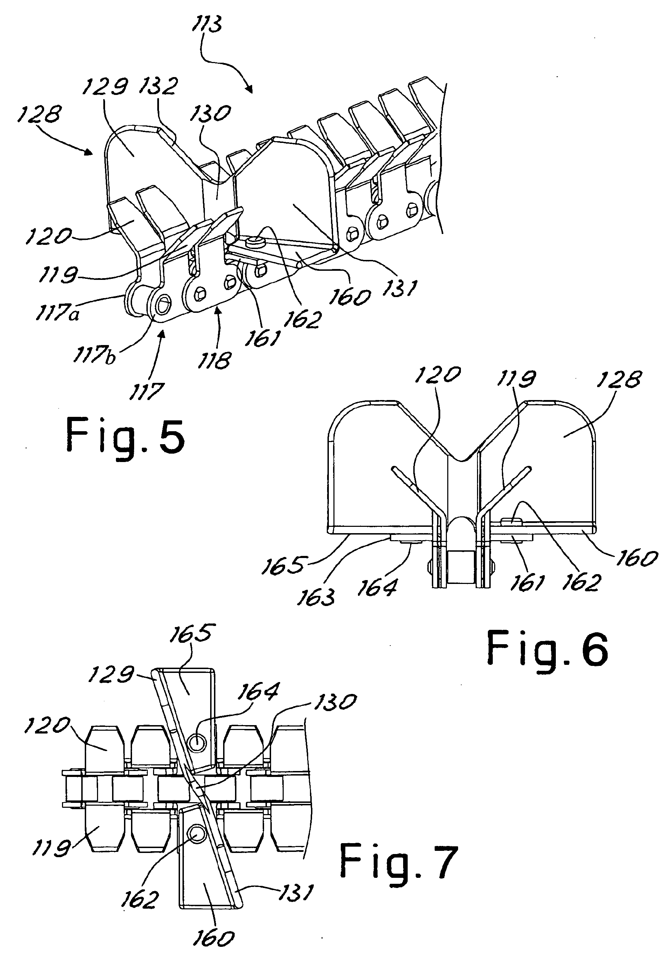

In figures 5 to 7 there is shown an alternative embodiment of a chain 113 according to the invention.

The chain comprises links 117, 118, of the bush or roller chain type. Each link comprises a pair of plates 117a, 117b, interconnected to the plates of the adjacent links by articulation pivots.

The positioning elements 119, 120 protrude as a piece from the plates of the link 117. The links 118, which have plates that are external to the links 117, have a similar shape, with the positioning elements aligned in a longitudinal direction compared with the elements 119, 120.

The positioning elements 119, 120 differ from those of the first embodiment inasmuch as they have a wall that is parallel to the sliding direction of the chain, appropriately tilted to grasp the sausage meat tube 15 on one side.

The pinching element 128 is riveted to a suitable link, which is different from the other links of the chain, provided with flanges 161, 163 that protrude as a piece from the plates of the link, laterally on opposite sides of the chain. The pinching element 128 comprises two portions of external wall 129, 131 that are slightly tilted with respect to a plane that is orthogonal to the sliding direction of the chain and a central wall 130 that joins the two portions 129, 131, which wall 130 has a greater tilt than the external portions.

From the portions 129, 131 flanges 160, 165 extend in a piece for fixing to the flanges 161, 163 by rivets 162, 164.

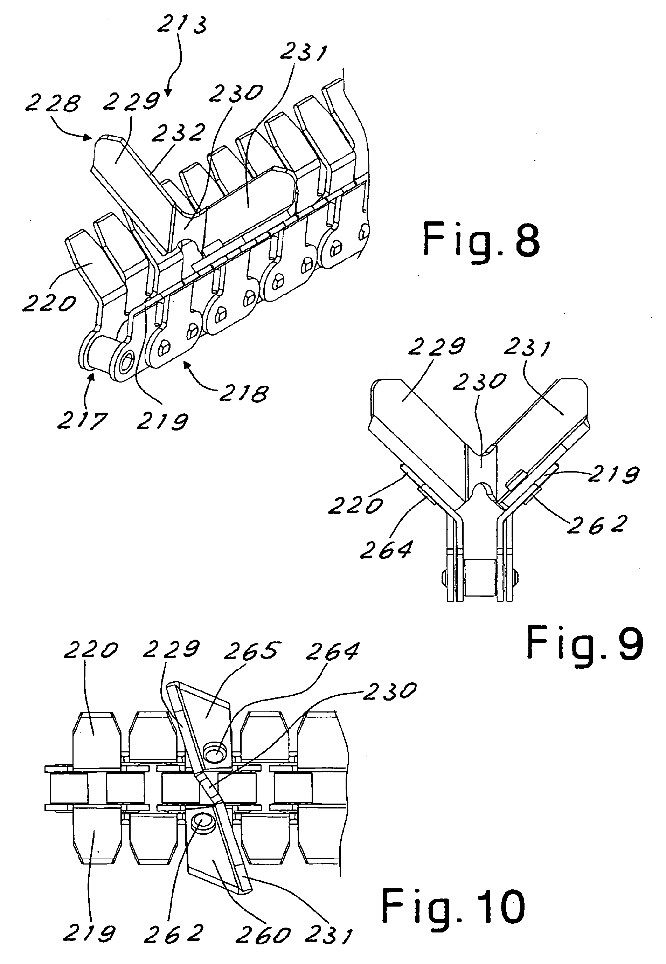

In figures 8 to 10 there is shown a third embodiment of a chain 213 according to the invention.

The links 217, 218 of the chain 213 are similar to 117, 118 disclosed for the second embodiment, with similar positioning elements 219, 220. The chain 213 differs from the chain 113 through the fact that the pinching element 228 is fixed to a link 217 shaped like the others at the positioning elements 219, 220 by rivets 262, 264.

The pinching element 228 differs from the element 128 disclosed previously only for the lower profile, substantially V-shaped and provided with fixing flanges 260, 265 suitable for being superimposed on the positioning elements 219, 220. Also, the element 228 has portions of external wall 229, 231, between which there is a central portion 230 with a greater tilt than the plane that is orthogonal to the sliding direction of the chain. As in the other cases, the element 228 has an upper V-shaped profile for pinching the tube.

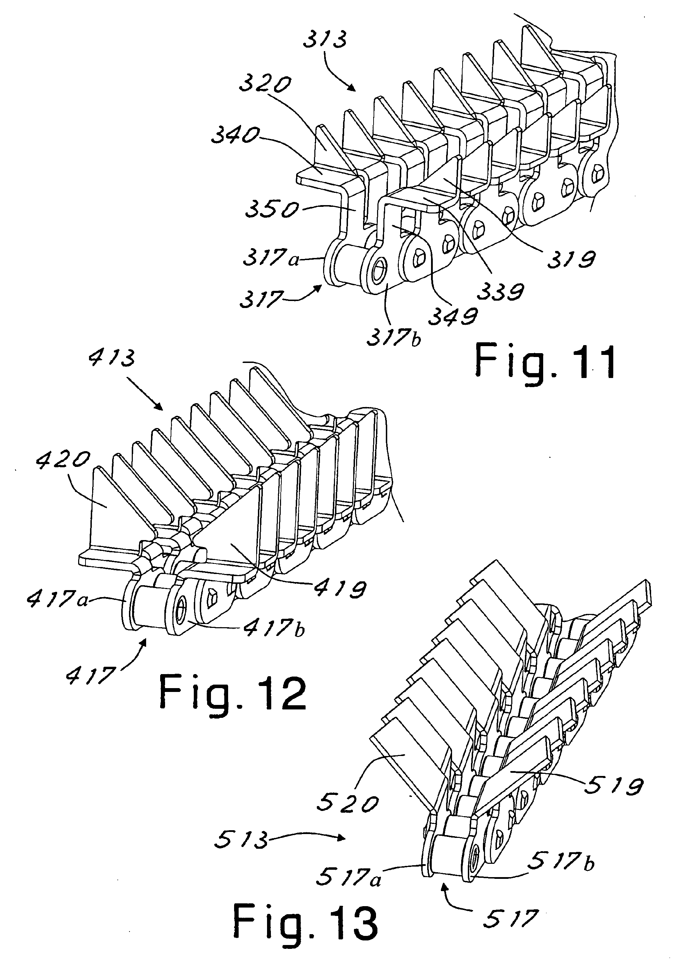

In figure 11 there is shown a fourth embodiment of a chain 313 according to the invention, without the mounted pinching element.

Also in this case the chain has links of the bush or roller chain type. From the plates 317a, 317b of the link 317 walls of one piece extend that are coplanar with the plate 349, 350, from the upper top of which walls, respectively 339 and 340, protrude laterally on opposite sides of the link. From the walls 339 and 340 small triangular walls, respectively 319, 320, protrude that are orthogonal to the sliding direction of the chain and are provided with an oblique edge intended to act as a positioning element of the sausage meat tube.

The pinching elements, which are not shown, may be of the type that is similar to those already shown for the second embodiment of figures 5 to 8, fixed with rivets to a suitable link of the chain provided with fixing flanges.

In figure 12 there is shown a fifth alternative embodiment of the chain 413 according to the invention. The links 417 are similar to those 17 disclosed for the preferred embodiment, with positioning elements 419, 420 made of one piece with the plates 417a, 417b and comprising triangular walls that are orthogonal to the sliding direction of the chain. Unlike the link 17, the walls 419, 420 are positioned near the same end of the link, and are not longitudinally staggered. For fixing the pinching elements (which are not shown), there can be arranged a suitable link with fixing flanges instead of the positioning elements, similarly to the second embodiment disclosed previously.

In figure 13 there is shown a sixth embodiment of the invention, where also the chain 513 comprises links 517 of the bush or a roller chain type with plates 517a, 517b interconnected to the adjacent links by means of articulation pivots. From the plates 517a, 517b the positioning elements of the tube 519, 520 extend as a piece.

In this case, the elements 519, 520 comprise oblique walls that are tilted both with respect to a plane that is orthogonal and to the sliding direction and to the sliding direction.

At this point it is clear how the objects of the present invention have been achieved.

In particular, a chain has been provided for machines for forming sausages that has a simplified structure and a limited number of pieces. This has enabled chain manufacturing costs to be reduced.

Further, the chain is easier to clean, there not being numerous interstices between pieces fixed on top of one another as occurred in the prior art.

The position of the pinching elements, in the event of snap-fitting on the links of the chain, can be customized in a rapid and easy manner.

Further, the weight of the chain is noticeably reduced.

Naturally, the above description of an embodiment applying the innovative principles of the present invention is provided merely by way of example of such innovative principles and must not therefore be taken to limit the scope of what is claimed here within.

## Claims

1. Chain intended to be used in a machine for forming sausages or the like starting from a sausage meat tube (15), the chain having in use a portion arranged adjacent to a corresponding portion of a second chain of the device with the sausage meat tube interposed between the two adjacent portions of the two chains, the chain comprising a plurality of links (17, 18, 117, 118, 217, 218, 317, 417, 517) interconnected in sequence and having pinching elements (28, 128, 228) for pinching the sausage meat tube suitable for corresponding with respective pinching elements (40) of the second chain of the device, the chain also comprising positioning elements (19, 20, 119, 120, 219, 220, 319, 320, 419, 420, 519, 520) suitable for grasping at least partially the sausage meat tube (15) along said portion adjacent to the second chain, **characterized in that** the positioning elements are made as one piece with the links of the chain.

2. Chain according to claim 1, **characterized in that** each link comprises a pair of parallel plates (18a, 18b) interconnected with the plates (17a, 17b) of the adjacent links by means of respective articulation pivots (26).

3. Chain according to claim 2, **characterized in that** each positioning element extends as one piece from a plate of a link.

4. Chain according to claim 1, **characterized in that** said positioning elements (19, 20) comprise a flat wall (19b, 20b) that is almost orthogonal to the movement direction of the chain, provided with an edge (19a, 20a) intended for contacting the sausage meat tube.

5. Chain according to claim 4, **characterized in that** said wall (19b, 20b) is almost triangular with a contact edge (19a, 20a) that is oblique to the plane of the plate of the link.

6. Chain according to claim 1, **characterized in that** each link (17, 18) comprises two positioning elements intended for being arranged on opposite sides of the sausage meat tube.

7. Chain according to claims 4 and 6, **characterized in that** said flat wall (19b) of a first positioning element (19) of a link (17) is near a front end of the link, the flat wall (20b) of the second positioning element (20) of the link being near a rear end of the link.

8. Chain according to claim 6, **characterized in that** each pinching element (28, 40) comprises two pockets (35a, 35b) each suitable for being snap-fitted or forced onto a wall (19b, 20b) of one of the positioning elements (19, 20) of a link.

9. Chain according to claim 6, **characterized in that** the positioning elements (19, 20) of a link are staggered in a direction that is longitudinal to the chain.

10. Chain according to claim 1, **characterized in that** the pinching elements are made of plastics.

11. Chain according to claim 1, **characterized in that** each pinching element (28, 40, 228) is fixable to a link of the chain at the positioning elements of the link.

12. Chain according to claim 1, **characterized in that** each pinching element (28, 40) can be snap-fitted onto a link of the chain.

13. Chain according to claim 1, **characterized in that** each pinching element (128, 228) is fixed to a link of the chain with rivets.

14. Chain according to claim 1, **characterized in that** each pinching element (28, 128, 228) comprises a wall substantially transverse to the movement direction of the chain (13) that has a V-shaped edge intended to cooperate with a similar V-shaped edge of a corresponding pinching element (40) of the second chain (14) for pinching the tube (15).

15. Chain according to claim 14, **characterized in that** the two sides (32, 34) of the V-shaped edge of the pinching element (28) have a tilt of approximately 50° with respect to the plane on which lie the two adjacent portions of the two chains (13, 14).

16. Chain according to claim 14, **characterized in that** the wall portion (30) with V-shaped edge of the pinching element is slightly tilted with respect to the direction that is orthogonal to the sliding direction of the chain, the pinching element (28) comprising two walls (29, 31) that are orthogonal to that direction on opposite sides of the wall portion with a V-shaped edge (30).

17. Machine for forming sausages comprising a chain according to any one of claims 1 to 16.

## Patentansprüche

1. Kette zur Verwendung in einer Maschine zum Formen von Würsten oder dergleichen ausgehend von einem Wurstbrätschlauch (15), wobei die Kette beim Betrieb einen neben einem entsprechenden Abschnitt einer zweiten Kette der Vorrichtung angeordneten Abschnitt aufweist, wobei der Wurstbrätschlauch zwischen die zwei nebeneinander liegenden Abschnitte der zwei Ketten eingefügt ist, wobei die Kette eine Vielzahl von Gliedern (17, 18, 117, 118, 217, 218, 317, 417, 517) umfasst, die nacheinander miteinander verbunden sind und Abschnürelemente (28, 128, 228) zum Abschnüren des Wurstbrätschlauchs aufweisen, die passend sind, um entsprechenden Abschnürelementen (40) der zweiten Kette der Vorrichtung zu entsprechen, wobei die Kette außerdem Positionierelemente (19, 20, 119, 120, 219, 220, 319, 320, 419, 420, 519, 520) umfasst, die geeignet sind, den Wurstbrätschlauch (15) zumindest teilweise entlang dem neben der zweiten Kette liegenden Abschnitt zu ergreifen, **dadurch gekennzeichnet, dass** die Positionierelemente einstückig mit den Gliedern der Kette ausgeführt sind.

2. Kette nach Anspruch 1, **dadurch gekennzeichnet, dass** jedes Glied ein Paar paralleler Platten (18a, 18b) umfasst, die mit Hilfe von jeweiligen Gelenkzapfen (26) mit den Platten (17a, 17b) der benachbarten Glieder verbunden sind.

3. Kette nach Anspruch 2, **dadurch gekennzeichnet, dass** sich jedes Positionierelement einstückig von einer Platte eines Glieds ausdehnt.

4. Kette nach Anspruch 1, **dadurch gekennzeichnet, dass** die Positionierelemente (19, 20) eine ebene Wand (19b, 20b) umfassen, die fast rechtwinklig zur Bewegungsrichtung der Kette ist und mit einer Kante (19a, 20a) versehen ist, die dazu bestimmt ist, den Wurstbrätschlauch zu berühren.

5. Kette nach Anspruch 4, **dadurch gekennzeichnet, dass** die Wand (19b, 20b) etwa dreieckig ist und eine Berührungskante (19a, 20a) aufweist, die schräg zur Ebene der Platte des Glieds ist.

6. Kette nach Anspruch 1, **dadurch gekennzeichnet, dass** jedes Glied (17, 18) zwei Positionierelemente umfasst, die dazu bestimmt sind, auf gegenüberliegenden Seiten des Wurstbrätschlauchs angeordnet zu sein.

7. Kette nach Anspruch 4 und 6, **dadurch gekennzeichnet, dass** sich die ebene Wand (19b) eines ersten Positionierelements (19) eines Glieds (17) nahe bei einem vorderen Ende des Glieds befindet, wobei sich die ebene Wand (20b) des zweiten Positionierelements (20) des Glieds nahe bei einem hinteren Ende des Glieds befindet.

8. Kette nach Anspruch 6, **dadurch gekennzeichnet, dass** jedes Abschnürelement (28, 40) zwei Taschen (35a, 35b) umfasst, die jeweils dazu geeignet sind, auf einer Wand (19b, 20b) von einem der Positionierelemente (19, 20) eines Glieds schnappbefestigt oder auf sie aufgepresst zu werden.

9. Kette nach Anspruch 6, **dadurch gekennzeichnet, dass** die Positionierelemente (19, 20) eines Glieds in einer Längsrichtung zur Kette versetzt angeordnet sind.

10. Kette nach Anspruch 1, **dadurch gekennzeichnet, dass** die Abschnürelemente aus Kunststoff bestehen.

11. Kette nach Anspruch 1, **dadurch gekennzeichnet, dass** jedes Abschnürelement (28, 40, 228) an einem Glied der Kette an den Positionierelementen des Glieds befestigt werden kann.

12. Kette nach Anspruch 1, **dadurch gekennzeichnet, dass** jedes Abschnürelement (28, 40) auf einem Glied der Kette schnappbefestigt werden kann.

13. Kette nach Anspruch 1, **dadurch gekennzeichnet, dass** jedes Abschnürelement (128, 228) mit Nieten an einem Glied der Kette befestigt ist.

14. Kette nach Anspruch 1, **dadurch gekennzeichnet, dass** jedes Abschnürelement (28, 128, 228) eine im Wesentlichen quer zur Bewegungsrichtung der Kette (13) angeordnete Wand umfasst, die eine V-förmige Kante aufweist, die dazu bestimmt ist, mit einer gleichartigen V-förmigen Kante eines entsprechenden Abschnürelements (40) der zweiten Kette (14) zum Abschnüren des Schlauchs (15) zusammenzuarbeiten.

15. Kette nach Anspruch 14, **dadurch gekennzeichnet, dass** die zwei Seiten (32, 34) der V-förmigen Kante des Abschnürelements (28) eine Neigung von ungefähr 50° zu der Ebene aufweisen, auf der die zwei nebeneinander liegenden Abschnitte der zwei Ketten (13, 14) liegen.

16. Kette nach Anspruch 14, **dadurch gekennzeichnet, dass** der Wandabschnitt (30) mit V-förmiger Kante des Abschnürelements gegenüber der Richtung, die rechtwinklig zur Gleitrichtung der Kette ist, leicht geneigt ist, wobei das Abschnürelement (28) auf gegenüberliegenden Seiten des Wandabschnitts mit einer V-förmigen Kante (30) zwei Wände (29, 31) umfasst, die rechtwinklig zu dieser Richtung sind.

17. Maschine zum Formen von Würsten, umfassend eine Kette gemäß einem der Ansprüche 1 bis 16.

## Revendications

1. Chaîne destinée à être utilisée dans une machine pour la formation de saucisses ou similaire à partir d'un tube de chair à saucisses (15), la chaîne ayant en service une portion disposée adjacente à une portion correspondante d'une deuxième chaîne du dispositif avec le tube de chair à saucisses interposé entre les deux portions adjacentes des deux chaînes, la chaîne comprenant une pluralité de maillons (17, 18, 117, 118, 217, 218, 317, 417, 517) interconnectés en séquence et ayant des éléments de pincement (28, 128, 228) pour pincer le tube de chair à saucisses, adaptés pour correspondre à des éléments de pincement respectifs (40) de la deuxième chaîne du dispositif, la chaîne comprenant également des éléments de positionnement (19, 20, 119, 120, 219, 220, 319, 320, 419, 420, 519, 520) adaptés pour saisir au moins partiellement le tube de chair à saucisses (15) le long de ladite portion adjacente à la deuxième chaîne, **caractérisée en ce que** les éléments de positionnement sont réalisés d'une seule pièce avec les maillons de la chaîne.

2. Chaîne selon la revendication 1, **caractérisée en ce que** chaque maillon comprend une paire de plaques parallèles (18a, 18b) interconnectées avec les plaques (17a, 17b) des maillons adjacents au moyen d'axes d'articulation respectifs (26).

3. Chaîne selon la revendication 2, **caractérisée en ce que** chaque élément de positionnement s'étend d'une seule pièce à partir d'une plaque d'un maillon.

4. Chaîne selon la revendication 1, **caractérisée en ce que** chaque élément de positionnement (19, 20) comprend une paroi plate (19b, 20b) qui est pratiquement orthogonale à la direction de mouvement de la chaîne, munie d'un bord (19a, 20a) destiné à venir en contact avec le tube de chair à saucisses.

5. Chaîne selon la revendication 4, **caractérisée en ce que** ladite paroi (19b, 20b) est pratiquement triangulaire avec un bord de contact (19a, 20a) qui est oblique par rapport au plan de la plaque du maillon.

6. Chaîne selon la revendication 1, **caractérisée en ce que** chaque maillon (17, 18) comprend deux éléments de positionnement destinés à être agencés sur des côtés opposés du tube de chair à saucisses.

7. Chaîne selon les revendications 4 et 6, **caractérisée en ce que** ladite paroi plate (19b) d'un premier élément de positionnement (19) d'un maillon (17) est proche d'une extrémité avant du maillon, la paroi plate (20b) du deuxième élément de positionnement (20) du maillon étant proche d'une extrémité arrière du maillon.

8. Chaîne selon la revendication 6, **caractérisée en ce que** chaque élément de pincement (28, 40) comprend deux poches (35a, 35b), chacune adaptée pour être fixée par encliquetage ou forcée sur une paroi (19b, 20b) d'un des éléments de positionnement (19, 20) d'un maillon.

9. Chaîne selon la revendication 6, **caractérisée en ce que** les éléments de positionnement (19, 20) d'un maillon sont décalés dans une direction qui est longitudinale par rapport à la chaîne.

10. Chaîne selon la revendication 1, **caractérisée en ce que** les éléments de pincement sont réalisés en plastique.

11. Chaîne selon la revendication 1, **caractérisée en ce que** chaque élément de pincement (28, 40, 228) peut être fixé à un maillon de la chaîne au niveau des éléments de positionnement du maillon.

12. Chaîne selon la revendication 1, **caractérisée en ce que** chaque élément de pincement (28, 40) peut être fixé par encliquetage sur un maillon de la chaîne.

13. Chaîne selon la revendication 1, **caractérisée en ce que** chaque élément de pincement (128, 228) est fixé à un maillon de la chaîne avec des rivets.

14. Chaîne selon la revendication 1, **caractérisée en ce que** chaque élément de pincement (28, 128, 228) comprend une paroi sensiblement transversale à la direction de mouvement de la chaîne (13) qui a un bord à profil en V destiné à coopérer avec un bord à profil en V similaire d'un élément de pincement correspondant (40) de la deuxième chaîne (14) pour pincer le tube (15).

15. Chaîne selon la revendication 14, **caractérisée en ce que** les deux côtés (32, 34) du bord à profil en V de l'élément de pincement (28) ont une inclinaison d'environ 50° par rapport au plan sur lequel reposent les deux portions adjacentes des deux chaînes (13, 14).

16. Chaîne selon la revendication 14, **caractérisée en ce que** la portion de paroi (30) avec bord à profil en V de l'élément de pincement est légèrement inclinée par rapport à la direction qui est orthogonale à la direction de glissement de la chaîne, l'élément de pincement (28) comprenant deux parois (29, 31) qui sont orthogonales à cette direction sur des côtés opposés de la portion de paroi avec un bord à profil en V (30).

17. Machine pour la formation de saucisses comprenant une chaîne selon l'une quelconque des revendications 1 à 16.
